# EUROPEAN PATENT SPECIFICATION

(11) **EP 0 795 694 B1**
(45) Date of publication and mention of the grant of the patent: **20.10.2004**
(21) Application number: 97301709.8
(22) Date of filing: 13.03.1997
(51) Int. Cl.: F16C 33/46, F16L 9/04, F16C 29/04

(54) **Bearing retainer for a roller bearing for use in a guide-post of a die-set**
Rollenlagerkäfig für eine Säulenführung eines Matrizensets
Cage pour roulement à rouleaux pour des colonnes de guidage de presse

(30) Priority: 15.03.1996 JP 5917296
(43) Date of publication of application: 17.09.1997
(73) Proprietor: Isel Co., Ltd., Yao-shi, Osaka (JP)
(72) Inventor: Mochizuki, Masanori, Yao-shi, Osaka (JP)
(74) Representative: Abbie, Andrew Kenneth

(56) References cited:
- GB-A- 2 177 165
- JP-A- 3 081 035
- US-A- 3 582 161
- US-A- 4 664 534
- US-A- 5 033 878
- US-A- 5 345 679

## Description

The present invention relates to a retainer for a roller bearing for supporting a sleeve for axial sliding movement relative to a post of a guide-post of a die-set where the sleeve is disposed about said post. A die-set is generally used to improve precision in press working. The die-set include a punch holder to hold a punch, a die holder facing the punch holder to hold a die and guide-posts which accessibly support each holder. The guide-post include a longitudinally extending post, a sleeve slidably received outside the post and a roller bearing inserted between the post and the sleeve.

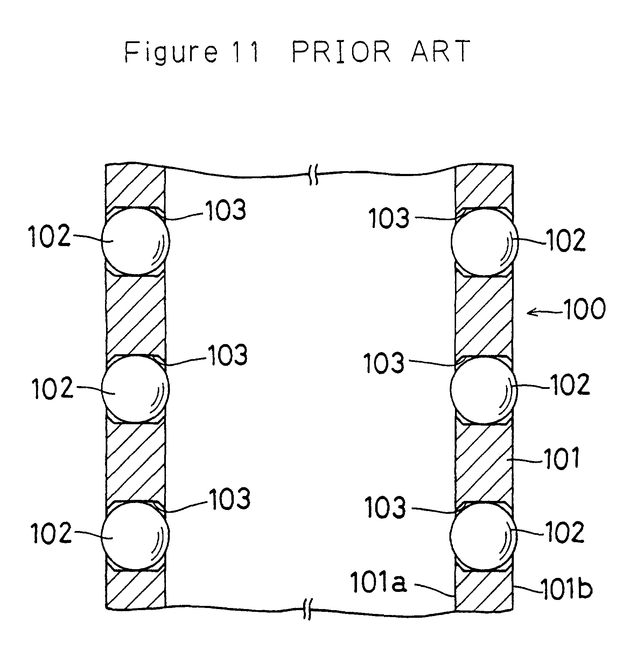

As shown in FIG. 11, a conventional bearing **100** for a guide-post includes a generally cylindrical retainer **101** and a plurality of balls **102** received in the retainer **101**. Each ball **102** is rotatively received in each hole **103** formed in the retainer **101** (such a conventional bearing is e.g. known from JP 03 081035 A).

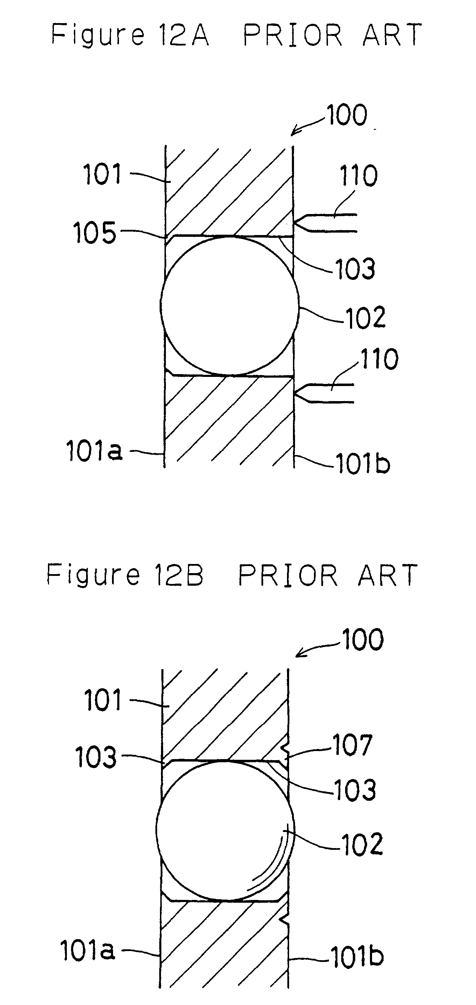

Each hole **103** of the retainer **101** is formed by drilling a pipe. A drilled hole **103**, as shown in FIG. 12A, has a tongue-like portion **105** protruding inwardly from the edge of the hole **103** on the inner side surface **101a** of the retainer **101**. The ball **102** is inserted into the hole **103** from the outer side surface **101b** of the retainer **101.**

After the ball 102 is inserted into the hole 103 a caulking tool 110 is pressed around the adjacent part of the edge of the hole 103 on the outer side surface 101b of the retainer 101. As a result of this caulking, as shown in FIG. 12B, a tongue-like portion 107 similar to the tongue-like portion 105 is formed around the edge of the hole 103 on the outer side surface 101b of the retainer 101. These tongue-like portions 105, 107 hold the ball 102 and prevent it from dropping out of the hole 103.

As described above, caulking process as well as drilling process is required in manufacturing a prior art bearing retainer for use in the guide-post. This increases the manufacturing cost of the bearing retainer.

It is an object of the present invention to solve or at least mitigate the above-mentioned problem.

The present invention provides a retainer for a roller bearing for supporting a sleeve for axial sliding movement relative to a post of a guide-post of a die-set where the sleeve is disposed about said post, the retainer comprising:
a cylindrical retainer body having a plurality of longitudinally extending flat portions,
a plurality of axially spaced supporting holes formed in each of said flat portions, each supporting hole being for supporting a roller and having tongue-like portions at the edge portions thereof,
wherein axially between adjacent said supporting holes a cavity is formed in said flat portions, a surface of each of said cavities being inclined relative to a direction in which a mold for forming the supporting holes and the cavities in said flat portion is withdrawn after molding such that a gap which gradually becomes larger is formed between the inclined surface and the mold to allow the respective edge portion on the outer side surface including the respective tongue-like portion to elastically deform toward the cavity in the axial direction when said mold is withdrawn, such that the apertures of said supporting holes becomes greater on the outer side surface of said retainer body.

Preferably, said cavities are trapezoidal in cross section and the apertures of said cavities become greater as they approach the outer side surfaces of said retainer.

In order that the present invention may be well understood, an embodiment thereof, which is given by way of example only, will now be described with reference to the accompanying drawings, in which:
Figure 1 is a front elevation view of a die-set which incorporates guide-posts including a bearing retainer for a roller bearing;
Figure 2 is a front elevation view of the retainer of Figure 1;
Figure 3 is a top plan view of the retainer of Figure 1;
Figure 4 is a sectional view of the retainer of Figures 2 and 3 along the line IV-IV;
Figure 5 is an enlarged view of a retaining hole as shown in Figure 4;
Figure 6 is a top sectional view of the arrangement of a resin mold set at the time of forming the retainer of Figure 1;
Figure 7 is a sectional view of a resin mold set as shown in Figure 6 taken along line VII-VII;
Figure 8 is a perspective view of a portion of an outer mold constituting a resin mold set;
Figure 9 is an enlarged view of a portion of the interior of a resin mold set after resin injection;
Figure 10 is an enlarged view illustrating how the resin formed product (the retainer) deforms when an outer mold moves away from an inner mold;
Figure 11 is a side sectional view of a portion of a conventional retainer; and
Figures 12A and 12B are side sectional views of a portion of a conventional retainer, showing its manufacturing process.

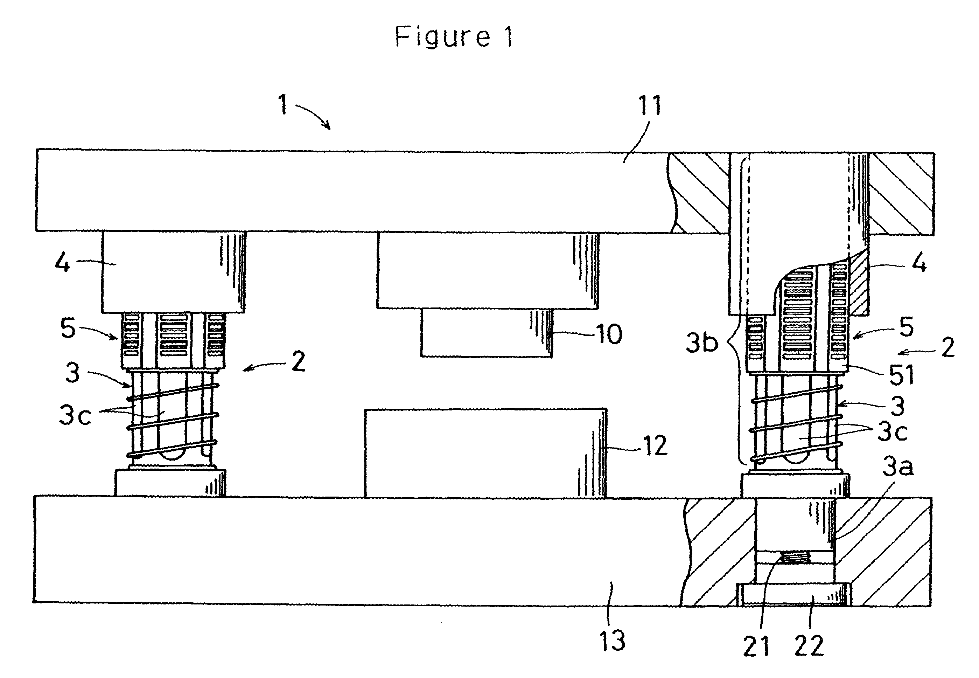

Turning now to the drawings, Figure 1 shows a die-set which incorporates guide-posts including bearing retainers (i.e. retainers for a roller bearing). A die-set 1 includes a punch holder 11 to hold a punch 10, a die holder 13 facing the punch holder 11 to hold a die 12 and guide-posts 2 which accessibly support the holders 11 and 13.

A guide-post 2 includes a longitudinally extending post 3, a sleeve 4 disposed about the post 3 and a roller bearing 5 inserted between the post 3 and the sleeve 4 for supporting the sleeve 4 for axial movement relative to the post 3.

The lower portion 3a of the post 3 is fixed to the die holder 13 by means of a fastening bolt 21 and a cap member 22. The outside part 3b of the post 3 has six flat portions 3c extending longitudinally and it is hexagonal in cross section. The outside part 3b may be octagonal or shaped differently in cross section.

The upper portion of the sleeve 4 is inserted and fixed into the punch holder 11. Alternatively, the post 3 may be fixed to the punch holder 11 and the sleeve 4 may be fixed into the die holder 13.

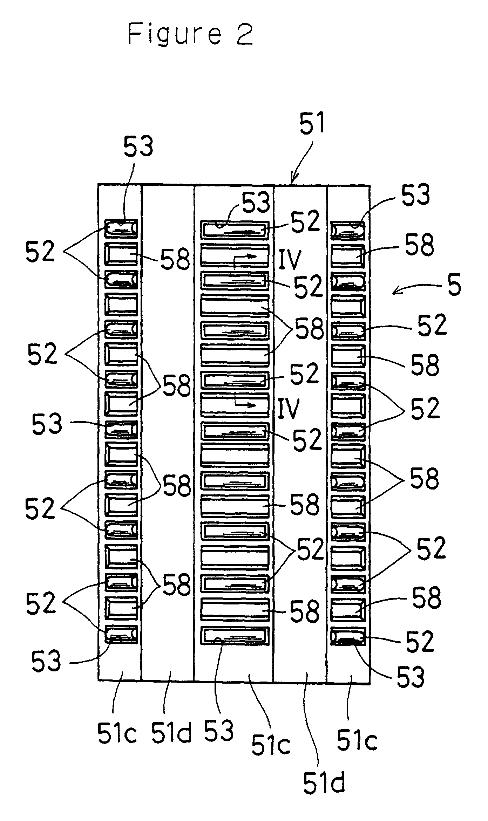

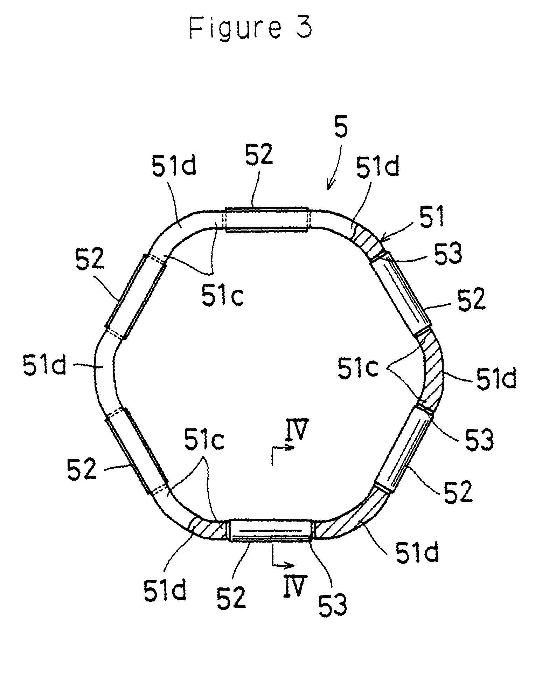

As shown in Figures 2 and 3, the roller bearing 5 includes a cylindrical retainer 51 and a plurality of rollers(needle-like rollers) 52 which are supported in the cylindrical retainer 51.

The retainer 51 has six flat portions 51c which extend longitudinally and it is hexagonal in cross section. Adjacent flat portions 51c are connected by a curved(or flat) portion 51d which also extends longitudinally. Each roller 52 is cylindrical and rotatively received in each supporting hole 53. The supporting holes 53 are axially spaced and are disposed along the flat portions 51c.

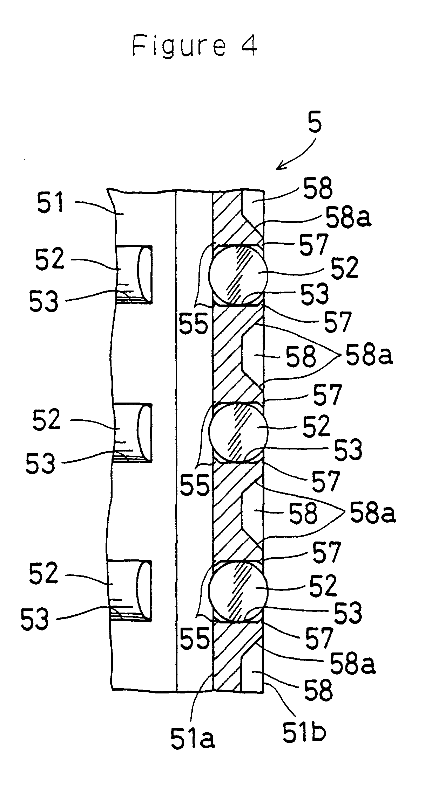

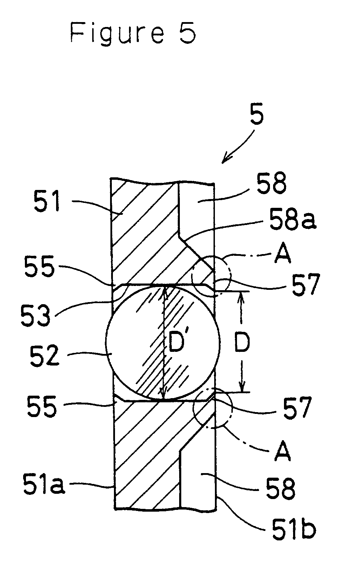

As shown in Figures 4 and 5, there are provided tongue-like portions 55 and 57 protruding inwardly from the edges of the supporting hole 53 on the inner and outer side surfaces 51a and 51b. These tongue-like portions 55 and 57 prevent the roller 52 from dropping out of the supporting hole 53.

Turning back to Figure 2, there are provided cavities 58 axially between each hole 53 on the flat portions 51c of the retainer 51. As shown in Figures 4 and 5, each cavity 58 is trapezoid in cross section and the aperture of each cavity 58 becomes larger as it approaches the outer side surface 51b of the retainer 51. The tips of the inclined surfaces 58a of each cavity 58 are disposed near the tongue-like portions 57. As shown in Figure 5, the edge portion A including the tongue-like portion 57 can elastically deform toward the cavity 58 such that the aperture D of the supporting hole 53 on the outer side surface 51b of the retainer 51 will be enlarged.

The cavity 58 is not limited to the trapezoid shape. Any shape may be used which allows the portion A to elastically deform toward the cavity 58. In addition, the cavity 58 may be a penetrating hole which penetrates to the inner side surface 51a of the retainer 51.

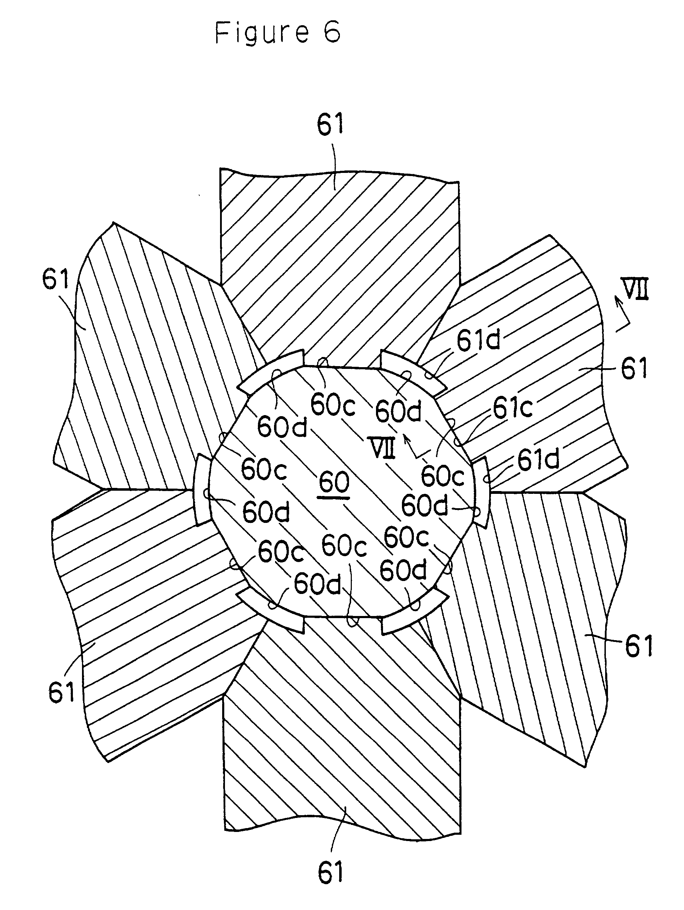

Figures 6 to 8 illustrate a resin mold set to form the retainer 51 by injection molding. Figure 6 is a top sectional view illustrating the arrangement of the resin mold set at the time of forming the bearing retainer 51. This resin mold set includes an inner mold 60 and outer molds 61 which are divided into six portions and placed around the inner mold 60.

The inner mold 60 has six flat portions 60c extending longitudinally(or perpendicularly to Figure 6) on the outer side surface. Adjacent flat portions 60c are connected by a curved(or flat) portion 60d which also extends longitudinally.

Each outer mold 61 has the same structure. The outer mold 61 includes flat portions 61c contacting the flat portion 60c of the inner mold 60 and curved(or flat) portions 61d which extend longitudinally and disposed at the both sides of the flat portions 61c. Each curved(or flat) portion 61d forms a continuous curved(or flat) face with the adjacent curved(or flat) portion 61d.

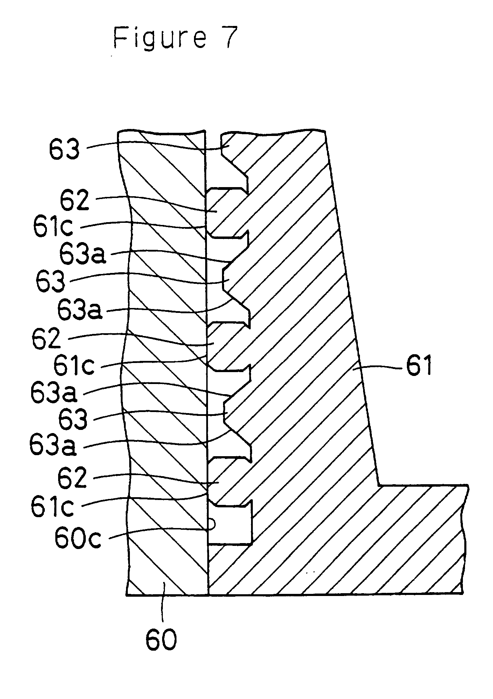

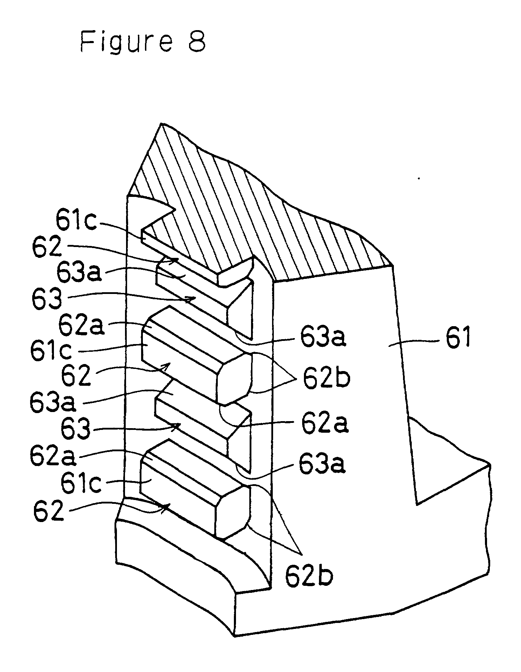

As shown in Figures 7 and 8, the outer mold 61 includes a plurality of first protrusions 62 which are rectangular in cross section, and a plurality of second protrusions 63 which are disposed between the first protrusions 62 and trapezoid in cross section.

The first protrusion 62 is provided for forming the supporting hole 53 of the retainer 51. The surface 61c of the first protrusion 62 contact the flat portion 60c of the inner mold 60. The inclined surfaces 62a and 62b are formed at the corners of the first protrusion 62. The second protrusion 63 is provided for forming the cavity 58 of the retainer 51. The second protrusion 63 has inclined surfaces 63a and there is provided a gap between the second protrusion 63 and the flat portion 60c of the inner mold 60.

Necessary procedures for forming the retainer 51 are as follows. First, heated and plasticized melting resin is injected into the resin mold set. After that, injected resin will be cooled and cured by cooling the resin mold set.

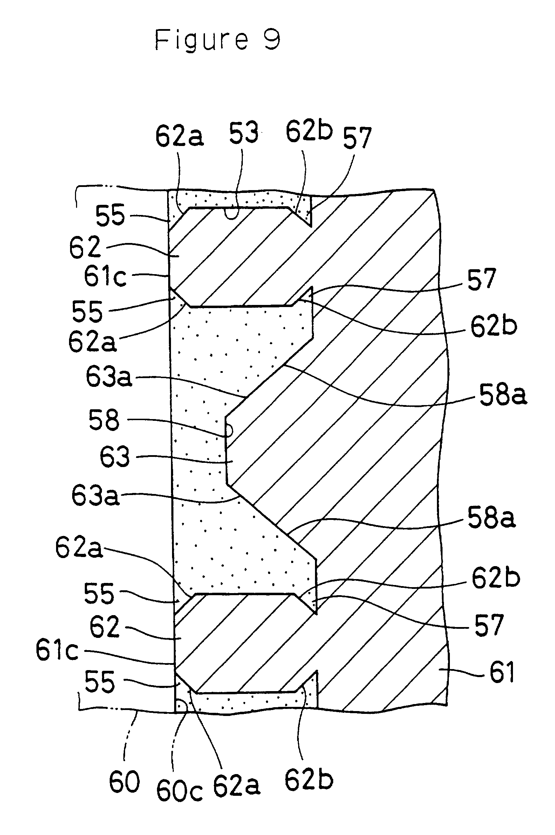

Figure 9 illustrates the interior of the resin mold set after the injected resin has been cured. As shown in Figure 9, resin injected around the inclined surfaces 62a and 62b of the first protrusion 62 forms the equivalent parts to tongue-like portions 55 and 57 of the retainer 51. Resin injected around the inclined surfaces 63a forms the equivalent parts to the inclined surface 58a of the retainer 51.

Secondly, when each outer mold 61 moves away from the inner mold 60 the resin mold product (or the retainer 51) will be obtained. At the time of moving of the outer mold 61 the inclined surface 62b of the first protrusion 62 interfere with the tongue-like portion 57 because the inclined surface 62b is inclined in the direction opposite to the draft taper.

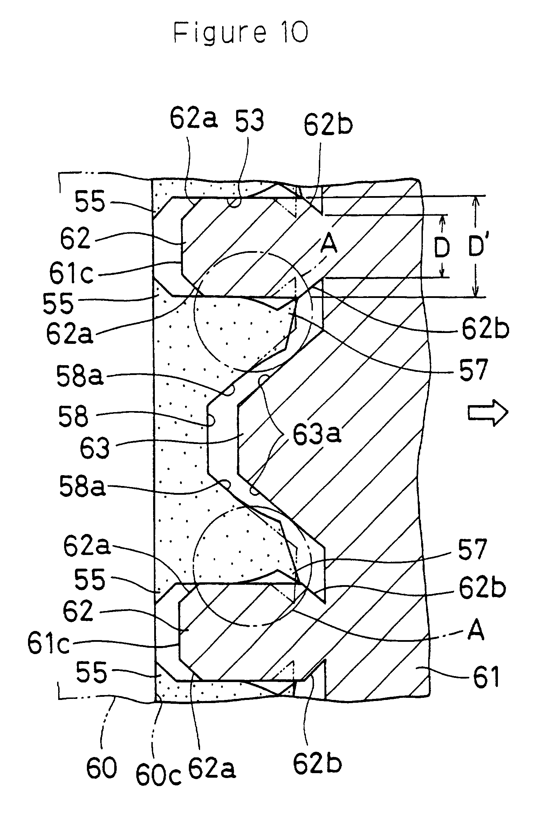

However, as shown in Figure 10, as the outer mold 61 for forming the supporting holes 53 and the cavities 58 in the flat portion 51c is withdrawn after molding a gap between the inclined surfaces 63a of the second protrusion 63 and the inclined surfaces 58a of the cavity 58 gradually becomes larger. Surfaces 58a (and surfaces 63a) are inclined relative to the direction in which the outer mold 61 is withdrawn (indicated by the arrow in Figure 10) to allow the edge portions A including the tongue-like portion 57 to elastically deform in the axial direction toward the cavity 58 and the aperture D of the supporting hole 53 will be enlarged to D' when the mold 61 is withdrawn. Thus, the first protrusion 62 can go through the supporting hole 53, and the outer mold 61 can move away from the inner mold 60 without crack or breakage of the tongue-like portion 57.

After the outer mold 61 has completely moved away from the inner mold 60 elastically deformed edge portion A returns to the original position and the retainer 51 is obtained.

In this way, the tongue-like portion 57 can be formed by injection molding on the outer side surface 51b of the retainer 51. As a result of this, caulking process for forming the tongue-like portion 57 is not required and manufacturing cost is reduced.

Then, by placing the rollers 52 into the supporting holes 53 of the retainer 51, the roller bearing will be completed. When placing the rollers 52 into the holes 53 the rollers 52 are pressed from the outer side surface 51b into the aperture formed by adjacent tongue-like portions 57. Then, similarly to the forming process of the retainer 51, the edge portions A including the tongue-like portion 57 elastically deform toward the cavity 58 and the aperture D of the supporting hole 53 will be enlarged to D'. This enables the rollers 52 to be easily placed into the holes 53.

In addition, when the roller bearing 5 functions in the guide-post 2 each cavity 58 functions as a reservoir for lubricating oil. Thus, life of the guide-post 2 will be improved.

In summary, the embodiment herein illustrated includes a cylindrical retainer body formed by injection molding. The retainer body has a plurality of longitudinally extending flat portions and it is polygonal in cross section. A plurality of holes for receiving rollers are formed in the flat portions of the retainer body. Tongue-like portions are formed at the upper and lower edge portions of the holes on the outer and inner side surfaces of the retainer body to prevent the rollers from dropping out. In addition, there are provided cavities between the holes on the outer side surfaces of the retainer body. The cavities are adapted to permit the edge portions of the holes on the outer side surface of the retainer body to elastically deform toward the cavities. Thus, the cavities prevent the edge portions of the holes and therefore the retainer body itself from cracking or breaking when an outer mold moves away from an inner mold after injection molding. In such a manner, it is possible to mold the tongue-like portions by injection molding at the edge of the holes on the outer side surface of the retainer body. The illustrated embodiment does not require the caulking process, and this decreases the manufacturing cost.

Those skilled in the art to which the invention pertains may make modifications and other embodiments employing the principles of this invention without departing from its essential characteristics as defined in the claims, particularly upon considering the foregoing teachings. The described embodiments are to be considered in all respects only as illustrative and not restrictive and the scope of the invention is, therefore, defined by the appended claims rather than by the foregoing description. Consequently, while the invention has been described with reference to particular embodiments modifications of structure, sequence, materials and the like would be apparent to those skilled in the art, yet still fall within the scope of invention.

## Claims

1. A retainer (51) for a roller bearing (5) for supporting a sleeve (4) for axial sliding movement relative to a post (3) of a guide-post (2) of a die-set (1) where the sleeve (4) is disposed about said post (3), the retainer (51) comprising:
a cylindrical retainer body having a plurality of longitudinally extending flat portions (51c),
a plurality of axially spaced supporting holes (53) formed in each of said flat portions (51c), each supporting hole (53) being for supporting a roller (52) and having tongue-like portions (55,57) at the edge portions (A) thereof,
wherein axially between adjacent said supporting holes (53) a cavity (58) is formed in said flat portions (51c), a surface (58a) of each of said cavities (58) being inclined relative to a direction in which a mold (61) for forming the supporting holes (53) and the cavities (58) in said flat portion (51c) is withdrawn after molding such that a gap which gradually becomes larger is formed between the inclined surface (58a) and the mold to allow the respective edge portion (A) on the outer side surface (51b) including the respective tongue-like portion (57) to elastically deform in the axial direction toward the cavity when said mold (61) is withdrawn such that the apertures (D) of said supporting holes (53) become greater on the outer side surface (51b) of said retainer body.

2. A retainer (5) as claimed in claim 1, wherein said cavities (58) are trapezoidal in cross section and the apertures of said cavities (58) become greater as they approach the outer side surfaces (51b) of said retainer (5).

## Patentansprüche

1. Aufnahme (51) für ein Rollenlager (5) zum Stützen einer Buchse (4) für eine axiale Gleitbewegung relativ zu einer Säule (3) einer Führungssäule (2) einer Säulenführung (1), wobei die Buchse (4) um die Säule (3) herum angeordnet ist, die Aufnahme (51) umfassend:
ein zylindrisches Aufnahmegehäuse mit mehreren sich in Längsrichtung erstreckenden flachen Abschnitten (51c),
mehrere axial voneinander beabstandete Stützlöcher (53), die in jedem der flachen Abschnitte (51c) ausgebildet sind, wobei jedes Stützloch (53) dem Stützen einer Rolle (52) dient und zungenartige Abschnitte (55, 57) an den Randabschnitten (A) der Stützlöcher (53) aufweist,
wobei axial zwischen benachbarten Stützlöchern (53) ein Hohlraum (58) in den flachen Abschnitten (51c) ausgebildet ist, wobei eine Fläche (58a) eines jeden Hohlraums (58) relativ zu einer Richtung geneigt ist, in der eine Form (61) zum Ausbilden der Stützlöcher (53) und der Hohlräume (58) in dem flachen Abschnitt (51c) nach dem Formen zurückgezogen wird, dergestalt, dass ein allmählich größer werdender Spalt zwischen der geneigten Fläche (58a) und der Form entsteht, damit der jeweilige Randabschnitt (A) auf der äußeren Seitenfläche (51b), der den jeweiligen zungenartigen Abschnitt (57) enthält, sich in der axialen Richtung zum Hohlraum hin elastisch verformen kann, wenn die Form (61) zurückgezogen wird, dergestalt, dass die Öffnungen (D) der Stützlöcher (53) auf der äußeren Seitenfläche (51b) des Aufnahmegehäuses größer werden.

2. Aufnahme (51) nach Anspruch 1, wobei die Hohlräume (58) einen trapezförmigen Querschnitt aufweisen und die Öffnungen der Hohlräume (58) in Richtung der äußeren Seitenflächen (51b) der Aufnahme (51) zunehmend größer werden.

## Revendications

1. Cage (51) pour roulement à rouleaux (5) servant à supporter un manchon (4) pour lui permettre un déplacement coulissant axial par rapport à une colonne (3) d'une colonne de guidage (2) d'un bloc à colonnes (1) où le manchon (4) est placé autour de ladite colonne (3), la cage (51) comprenant :
un corps de cage cylindrique comportant une pluralité de parties plates s'étendant longitudinalement (51c),
une pluralité de trous de support axialement espacés (53) formés dans chacune desdites parties plates (51c), chaque trou de support (53) servant à supporter un rouleau (52) et ayant des parties en forme de languettes (55, 57) sur les parties de bord (A) de celui-ci,
dans laquelle, axialement entre lesdits trous de support (53) adjacents, une cavité (58) est formée dans lesdites parties plates (51c), une surface (58a) de chacune desdites cavités (58) étant inclinée par rapport à une direction dans laquelle un moule (61) servant à former les trous de support (53) et les cavités (58) dans ladite partie plate (51c) est retiré après moulage de sorte qu'un espace qui devient progressivement plus grand est formé entre la surface inclinée (58a) et le moule pour permettre à la partie de bord respective (A) sur la surface latérale extérieure (51b) incluant la partie en forme de languette (57) respective de se déformer de manière élastique dans la direction axiale vers la cavité lorsque ledit moule (61) est retiré, de sorte que les ouvertures (D) desdits trous de support (53) deviennent plus grandes sur la surface latérale extérieure (51b) dudit corps de cage.

2. Cage (5) selon la revendication 1, dans laquelle lesdites cavités (58) sont de section trapézoïdale et les ouvertures desdites cavités (58) deviennent plus grandes en s'approchant des surfaces latérales extérieures (51b) de ladite cage (5).
